# FASCICULE DE BREVET EUROPEEN

(11) **EP 3 886 664 B1**
(45) Date de publication et mention de la délivrance du brevet: **10.08.2022**
(21) Numéro de dépôt: 19805703.6
(22) Date de dépôt: 22.11.2019
(51) Int. Cl.: A47J 45/08, A47J 45/06

(54) **RECIPIENT DE CUISSON MUNI D'UNE POIGNÉE TUBULAIRE AMÉLIORÉE**
MIT EINEM VERBESSERTEN ROHRFÖRMIGEN GRIFF AUSGESTATTETES KOCHGEFÄSS
COOKING VESSEL PROVIDED WITH AN IMPROVED TUBULAR HANDLE

(30) Priorité: 30.11.2018 FR 1872137
(43) Date de publication de la demande: 06.10.2021
(73) Titulaire: SEB S.A., 69130 Ecully (FR)
(72) Inventeur: GUEGAN, Laurent, 74150 LORNAY (FR)
(74) Mandataire: SEB Développement
(86) Numéro de dépôt international: PCT/EP2019/082315
(87) Numéro de publication internationale: WO 2020/109182

(56) Documents cités:
- EP-A2- 0 240 225
- CH-A- 235 544
- FR-A- 335 111
- GB-A- 2 352 672

## Description

La présente invention concerne un récipient de cuisson destiné à la cuisson d'aliments et qui comporte une poignée tubulaire, notamment une poêle, une casserole ou une sauteuse. Un tel récipient de cuisson est destiné à être posé sur une source de chauffe notamment un réchaud à gaz.

On connait du document EP0240225 une poignée destinée à être fixée sur une paroi latérale d'un récipient de cuisson. La poignée comporte une partie de fixation prolongée par une partie de préhension tubulaire qui s'étend radialement à la paroi selon une direction longitudinale et qui présente une extrémité libre munie d'un orifice.

La partie de préhension tubulaire comporte une extrémité de fixation et l'extrémité de fixation comporte une paroi inférieure munie d'une première ouverture traversante et une paroi supérieure munie d'une deuxième ouverture traversante. Les première et deuxième ouvertures sont agencées de manière adjacente à la paroi latérale. Lors d'une cuisson sur une source de chauffe notamment un réchaud à gaz, des courants chauds ascendants qui progressent le long de la paroi latérale à l'endroit où la poignée est fixée traversent les première et deuxième ouvertures. Une partie de ces courants chauds peut être déviée après le passage dans la première ouverture à l'intérieur de la partie de préhension tubulaire pour ressortir par l'orifice de l'extrémité libre.

Ainsi, la zone de préhension peut s'échauffer pendant la cuisson et atteindre une température excessive pour qu'un utilisateur puisse la saisir sans des moyens de protection, par exemple un gant.

Le document GB-A-2352672 décrit un récipient de cuisson selon le préambule de la revendication indépendante 1.

Le but de la présente invention est de remédier aux inconvénients précités et de proposer un récipient de cuisson muni d'une poignée tubulaire présentant une construction optimisée pour permettre à l'utilisateur de le manipuler en toute sécurité, notamment au niveau de la température d'une partie de préhension de la poignée tubulaire.

Un autre but de l'invention est de proposer un récipient de cuisson muni d'une poignée tubulaire qui soit de conception simple et économique à mettre en œuvre. Ces buts sont atteints avec un récipient de cuisson destiné à être posé sur une source de chauffe, ledit récipient de cuisson comportant une paroi latérale et une poignée fixée sur ladite paroi latérale par des organes de fixation, ladite poignée comportant une partie de préhension tubulaire qui s'étend radialement à la paroi selon une direction longitudinale, ladite partie de préhension tubulaire présentant une extrémité de fixation et une extrémité libre munie d'un orifice, l'extrémité de fixation étant fermée par une paroi d'extrémité distante de la paroi latérale d'au moins 2 millimètres pour former un canal entre la paroi latérale et la paroi d'extrémité et l'extrémité de fixation comportant une paroi inférieure fermée et une paroi supérieure munie d'au moins une ouverture traversante agencée de manière adjacente à la paroi d'extrémité de manière à ce que des courants chauds ascendants qui progressent lors d'une cuisson le long de la paroi latérale, à l'endroit où la poignée est fixée, créent une aspiration au niveau de l'au moins une ouverture pour générer un courant d'air depuis l'orifice vers l'intérieur de la partie de préhension tubulaire et ainsi la refroidir.

La température de la partie de préhension de la poignée est donc maintenue à un niveau suffisamment bas par le courant d'air frais qui circule dans la poignée tubulaire pour qu'un utilisateur puisse saisir la partie de préhension sans moyens de protection, à tout moment de la cuisson.

La paroi d'extrémité distante de la paroi latérale d'au moins 2 millimètres permet d'éloigner l'extrémité de fixation de la paroi latérale très chaude pendant la cuisson et permet de former un canal de passage de la partie des courants ascendants les plus chauds qui progressent le long de la paroi latérale. Ainsi, l'élévation de la température de la partie de préhension est freinée.

De préférence, les organes de fixation comportent deux pattes latérales qui s'étendent verticalement et le long de la direction longitudinale, entre l'extrémité de fixation et la paroi latérale.

Ainsi, des courants chauds ascendants qui progressent lors d'une cuisson le long de la paroi latérale, à l'endroit où la poignée est fixée ne sont pas gênés par les deux pattes latérales qui s'étendent verticalement dans la direction de leur progression.

De manière avantageuse, le canal délimité latéralement par les pattes latérales, présente une section d'entrée et une section de sortie des courants chauds ascendants, la section d'entrée étant supérieure à la section de sortie.

Ainsi, la vitesse de progression des courants chauds ascendants est accélérée dans le canal et la dépression au niveau de l'ouverture traversante est améliorée.

Avantageusement, l'au moins une ouverture s'étend selon la direction longitudinale sur au moins 5 millimètres, de préférence sur au moins 10 millimètres.

Ainsi, l'au moins une ouverture comporte deux cotés qui s'étendent le long de la direction longitudinale, chaque côté créant une zone de décrochage des courants chauds ascendants qui progressent lors d'une cuisson le long de la paroi latérale et autour de l'extrémité de fixation de la partie de préhension tubulaire pour générer une dépression au-dessus de l'ouverture traversante.

De préférence, l'au moins une ouverture traversante présente une surface supérieure à 100 mm², de préférence supérieure à 200 mm².

Une telle surface permet aux courants ascendants de créer une aspiration au niveau de l'au moins une ouverture pour générer un courant d'air suffisant à l'intérieur de la partie de préhension tubulaire pour la refroidir à un niveau de température acceptable pour la préhension à main nue.

Avantageusement, la paroi d'extrémité comporte un bord supérieur qui délimite partiellement l'au moins une ouverture traversante.

Ainsi, le bord supérieur crée une zone de décrochage des courants chauds ascendants qui progressent lors d'une cuisson le long de la paroi latérale et autour de l'extrémité de fixation de la partie de préhension tubulaire pour générer une dépression au-dessus de l'ouverture traversante.

De manière avantageuse, la poignée comporte un plan de symétrie vertical qui s'étend le long de la direction longitudinale. Ainsi, dans le cas où la paroi supérieure n'est munie que d'une seule ouverture traversante, cette ouverture traversante s'étend de part et d'autre du plan de symétrie.

Avantageusement, l'au moins une ouverture traversante présente une forme de trapèze dont une base est formée par le bord supérieur, ledit bord supérieur étant distant de la paroi latérale d'au moins 10 millimètres, de préférence d'au moins 20 millimètres.

De manière avantageuse, la forme de trapèze comporte une grande base et une petite base, la grande base étant formée par le bord supérieur.

De préférence, la forme de trapèze comporte deux cotés qui s'étendent le long de la direction longitudinale X, le bord supérieur ainsi que chaque côté créant une zone de décrochage des courants chauds ascendants qui progressent lors d'une cuisson le long de la paroi latérale et autour de l'extrémité de fixation de la partie de préhension tubulaire pour générer une dépression au-dessus de l'ouverture traversante.

De préférence, le bord supérieur présente une forme de V à pointe arrondie.

Ainsi, le bord supérieur est plus long et la dépression au-dessus de l'ouverture traversante est plus importante.

Avantageusement, la partie de préhension tubulaire est réalisée en acier inoxydable austénitique.

L'acier inoxydable austénitique présente une faible conductivité thermique qui permet de ralentir le flux thermique par conduction vers la partie de préhension.

De préférence, la partie de préhension tubulaire présente une épaisseur inférieure à 3 millimètres, de préférence inférieure à 2 millimètre.

Cette disposition permet d'obtenir un bon compromis entre une épaisseur la plus fine possible pour des raisons thermiques et une épaisseur suffisante pour une bonne tenue mécanique.

De préférence, la partie de préhension ne comporte qu'une ouverture traversante entre la paroi d'extrémité et l'orifice.

Ainsi, la dépression créée au niveau de la seule ouverture par les courants chauds ascendants qui progressent le long de la paroi latérale ne peut provoquer qu'une circulation d'air frais dans la partie de préhension tubulaire à partir de l'orifice.

Avantageusement, le récipient de cuisson est une poêle, une casserole ou une sauteuse.

On comprendra mieux les buts, aspects et avantages de la présente invention d'après la description donnée ci-après des modes particuliers de réalisation de l'invention présentés à titre d'exemples non limitatifs, en se référant aux dessins annexés dans lesquels
[Fig 1] La figure 1 est une vue en perspective d'un récipient de cuisson muni d'une poignée tubulaire selon un premier mode particulier de réalisation de l'invention,
[Fig 2] La figure 2 est une vue en perspective de la poignée tubulaire illustré à la figure 1,
[Fig 3] La figure 3 est une vue en coupe suivant le plan de coupe III du récipient de cuisson muni la poignée illustrée à la figure 1,
[Fig 4] La figure 4 est une vue en perspective d'un récipient de cuisson muni d'une poignée tubulaire selon un deuxième mode particulier de réalisation de l'invention.

On notera que, dans ce document, les termes «horizontal», «vertical», «inférieur», «supérieur», «longitudinal», «transversal», «haut», «bas», employés pour décrire le récipient de cuisson muni de la poignée, font référence à ce récipient de cuisson en situation d'usage, lorsqu'il est posé sur un plan horizontal.

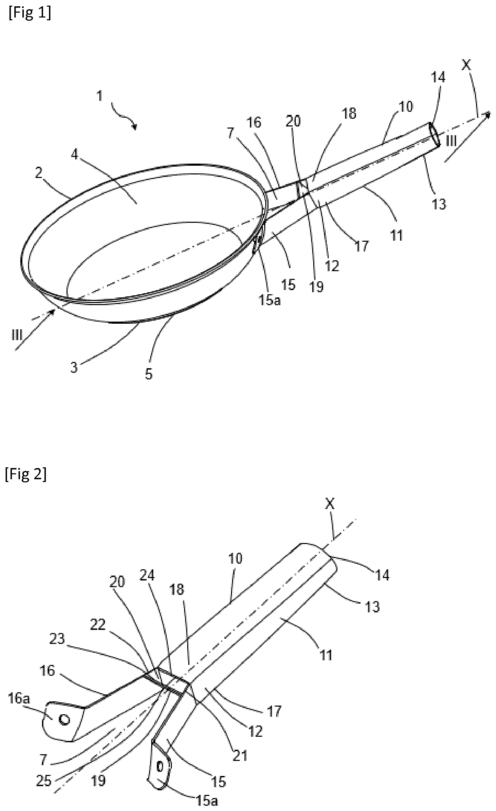

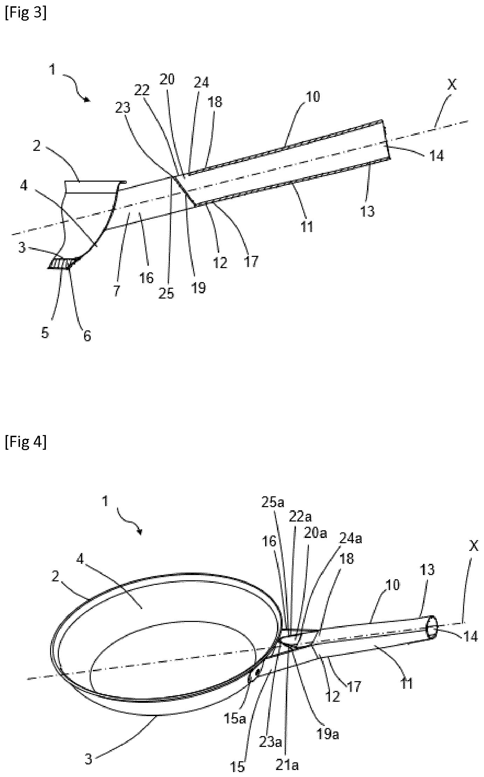

Tel que visible aux figures 1 à 3, un récipient de cuisson 1 comporte une calotte 2 comprenant un fond 3 et une paroi latérale 4. La calotte 2 est réalisée en acier inoxydable, par exemple par frappe d'un disque. Le fond 3 comporte une coupelle 5 en acier inoxydable qui renferme une partie 6 en aluminium destinée à répartir la chaleur (Fig.3). Le récipient de cuisson 1 est conçu pour assurer la cuisson de différents aliments sous l'effet d'une source de chauffe externe. Le récipient de cuisson 1 comporte une poignée 10 agencée sur la paroi latérale 4. Le récipient de cuisson 1 présente ainsi un caractère portatif, c'est-à-dire qu'il peut être déplacé manuellement.

La poignée 10 comporte une partie de préhension tubulaire 11 qui s'étend radialement à la paroi latérale 4 selon une direction longitudinale X. La partie de préhension tubulaire 11 présente une extrémité de fixation 12 et une extrémité libre 13 munie d'un orifice 14. La partie de préhension tubulaire 11 présente une section transversale à la direction longitudinale X sensiblement constante. L'orifice 14 présente une surface S1 équivalente à la section transversale.

L'extrémité de fixation 12 comporte une paroi d'extrémité 19, une paroi inférieure 17 fermée et une paroi supérieure 18 munie d'une ouverture traversante 20 agencée de manière adjacente à la paroi d'extrémité 19. La paroi d'extrémité 19 est distante de la paroi latérale 4 d'au moins 2 millimètres pour former un canal 7 de passage d'une partie des courants chauds ascendants qui progressent le long de la paroi latérale lors d'une cuisson.

La paroi inférieure 17 et la paroi supérieure 18 forment respectivement la moitié de l'extrémité de fixation 12 de la partie de préhension tubulaire 11. La poignée 10, notamment l'extrémité de fixation 12, comporte un plan de symétrie vertical passant par la direction longitudinale X. Tel que visible à la figure 2, l'ouverture traversante 20 présente deux cotés 21, 22 qui s'étendent le long de la direction longitudinale X sur 10 millimètres. L'ouverture traversante 20 comporte une partie antérieure 23 fermée par un bord supérieur 25 de la paroi d'extrémité 19 et une partie postérieure 24.

La partie de préhension tubulaire 11 ne comporte qu'une seule ouverture traversante 20 agencée entre la paroi d'extrémité 19 et l'orifice 14, le long de la direction longitudinale X. L'ouverture traversante 20 s'étend de part et d'autre du plan de symétrie vertical passant par la direction longitudinale X sur une distance moyenne Z égale à 25 millimètres. L'ouverture traversante 20 présente une surface S2 = X x Z égale à 250 mm².

De manière avantageuse, le rapport de la surface S1 de l'orifice 14 sur la surface S2 de l'ouverture traversante 20 est inférieur à 1. Dans ce mode de réalisation, le rapport S2/S1 est égal à 0,5.

L'extrémité de fixation 12 comporte deux pattes latérales 15, 16 qui forment des organes de fixation à la paroi latérale 4. Les deux pattes latérales 15, 16 s'étendent verticalement dans la direction de la progression des courants chauds ascendants qui progressent lors d'une cuisson le long de la paroi latérale 4, à l'endroit où la poignée 10 est fixée. Les deux pattes latérales 15, 16 s'étendent le long de la direction longitudinale X, entre l'extrémité de fixation 12 et la paroi latérale 4. Ainsi, le canal 7 est formé par les deux pattes latérales 15, 16, la paroi latérale 4 et la paroi d'extrémité 19. Chaque patte latérale 15, 16 comporte une patte de fixation 15a, 16a qui s'étend transversalement à la direction longitudinale X et qui est fixée à la paroi latérale 4 par rivetage.

La poignée 10, notamment la partie de préhension tubulaire 11, est réalisée à partir d'une tôle en acier inoxydable, de préférence en acier inoxydable austénitique. La poignée 10, notamment la partie de préhension tubulaire 11, présente donc une épaisseur sensiblement constante égale à 1,2 mm.

Lors d'une cuisson, notamment sur un réchaud à gaz, des courants d'air chauds ascendants formés notamment par les gaz de combustion progressent le long de la paroi latérale 4, en particulier au niveau de l'extrémité de fixation 12 de la partie de préhension tubulaire 11. L'écoulement des courants d'air chauds crée une surpression sur la paroi inférieure 17 et sur la paroi d'extrémité 19 ainsi qu'une dépression sur la paroi supérieure 18 où est positionnée l'ouverture traversante 20. Ainsi, un courant d'air est généré depuis l'orifice 14 vers l'ouverture traversante 20, en passant par l'intérieur de la partie de préhension tubulaire 11. L'air capté au niveau de l'orifice 14 étant plus frais, la partie de préhension tubulaire 11 se trouve refroidie.

Il existe un test normatif imposant des limites de température à ne pas dépasser sur la poignée d'un récipient de cuisson utilisé sur un réchaud à gaz.

Pour une poignée métallique, cette limite est fixée à 55°C suivant un protocole détaillé dans la norme EN 12983-1 (Annexe F). Au-delà de cette température de 55°C, le fabriquant doit indiquer à l'utilisateur qu'il faut utiliser un moyen de protection thermique du type gant ou manique pour saisir la poignée.

La demanderesse a réalisé des mesures de températures à différents points de mesure sur la partie de préhension tubulaire 11 d'une poêle de diamètre 24 cm sur un bruleur à gaz de diamètre 7,5 cm. La poêle est remplie avec 1, 5 litre d'eau et le débit de gaz est établi à 185 L/h. Dans ces conditions, on compare les températures à un point correspondant à 1/3 de la longueur de la poignée, en partant de la paroi latérale, pour une poignée standard correspondant à la construction décrite dans le document EP0240225 et pour une poignée améliorée présentant la construction ci-dessus. La poignée 10 améliorée présente une température inférieure de 20°C par rapport à la poignée standard.

Dans une variante de réalisation illustrée à la figure 4, l'extrémité de fixation 12 comporte une paroi d'extrémité 19a qui prend la forme d'une étrave de bateau qui s'étend le long de la direction longitudinale X. La paroi d'extrémité 19a est distante de la paroi latérale 4 d'au moins 2 millimètres pour former un canal 7 entre la paroi latérale 4, la paroi d'extrémité 19a et les deux pattes latérales 15, 16. L'extrémité de fixation 12 comporte une paroi inférieure 17 fermée et une paroi supérieure 18 munie d'une ouverture traversante 20a agencée de manière adjacente à la paroi d'extrémité 19a. La paroi d'extrémité 19a comporte un bord supérieur 25a qui présente une forme de V à pointe arrondie. L'ouverture traversante 20a est formée par le bord supérieur 25a et présente une partie antérieure 23 correspondant à la pointe du V et deux cotés 21a, 22a qui s'étendent le long de la direction longitudinale X sur 20 millimètres. L'ouverture traversante 20a comporte une partie postérieure 24a qui ferme la forme en V.

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention.

Dans une variante de réalisation, la paroi d'extrémité comporte un bord supérieur qui présente une forme semi circulaire. L'ouverture traversante présente la forme d'un demi cercle.

## Revendications

1. Récipient de cuisson (1) destiné à être posé sur une source de chauffe, ledit récipient de cuisson (1) comportant une paroi latérale (4) et une poignée (10) fixée sur ladite paroi latérale (4) par des organes de fixation (15, 16), ladite poignée (10) comportant une partie de préhension tubulaire (11) qui s'étend radialement à la paroi latérale (4) selon une direction longitudinale X, ladite partie de préhension tubulaire (11) présentant une extrémité de fixation (12) et une extrémité libre (13) munie d'un orifice (14), l'extrémité de fixation (12) étant fermée par une paroi d'extrémité (19, 19a) distante de la paroi latérale d'au moins 2 millimètres pour former un canal (7) entre la paroi latérale (4) et la paroi d'extrémité (19, 19a) et l'extrémité de fixation (12) comportant une paroi inférieure (17) fermée, **caractérisé en ce que** l'extrémité de fixation comporte une paroi supérieure (18) munie d'au moins une ouverture traversante (20, 20a) agencée de manière adjacente à la paroi d'extrémité (19, 19a) de manière à ce que des courants chauds ascendants qui progressent lors d'une cuisson le long de la paroi latérale (4), à l'endroit où la poignée (10) est fixée, créent une aspiration au niveau de l'au moins une ouverture (20, 20a) pour générer un courant d'air depuis l'orifice (14) vers l'intérieur de la partie de préhension tubulaire (11) et ainsi la refroidir.

2. Récipient de cuisson (1) selon la revendication 1, **caractérisé en ce que** les organes de fixation comportent deux pattes latérales (15, 16) qui s'étendent verticalement et le long de la direction longitudinale X, entre l'extrémité de fixation (12) et la paroi latérale (4).

3. Récipient de cuisson (1) selon l'une quelconque des revendications 1 à 2, **caractérisé en ce que** l'au moins une ouverture traversante (20, 20a) s'étend selon la direction longitudinale X sur au moins 5 millimètres, de préférence sur au moins 10 millimètres.

4. Récipient de cuisson (1) selon l'une quelconque des revendications 1 à 3, **caractérisé en ce que** l'au moins une ouverture traversante (20, 20a) présente une surface supérieure à 100 mm², de préférence supérieure à 200 mm².

5. Récipient de cuisson (1) selon l'une quelconque des revendications 1 à 4, **caractérisé en ce que** la paroi d'extrémité (19, 19a) comporte un bord supérieur (25, 25a) qui délimite partiellement l'au moins une ouverture traversante (20, 20a).

6. Récipient de cuisson selon la revendication 5, **caractérisé en ce que** l'au moins une ouverture traversante (20) présente une forme de trapèze dont une base est formée par le bord supérieur (25), ledit bord supérieur (25) étant distant de la paroi latérale d'au moins 10 millimètres, de préférence d'au moins 20 millimètres.

7. Récipient de cuisson (1) selon la revendication 6, **caractérisé en ce que** la forme de trapèze comporte deux cotés (21, 22) qui s'étendent le long de la direction longitudinale X, le bord supérieur (25) ainsi que chaque côté (21, 22) créant une zone de décrochage des courants chauds ascendants qui progressent lors d'une cuisson le long de la paroi latérale (4) et autour de l'extrémité de fixation (12) de la partie de préhension tubulaire (11) pour générer une dépression au-dessus de l'ouverture traversante (20).

8. Récipient de cuisson (1) selon la revendication 5, **caractérisé en ce que** le bord supérieur (25a) présente une forme de V à pointe arrondie.

9. Récipient de cuisson (1) selon l'une quelconque des revendications 1 à 8, **caractérisé en ce que** la partie de préhension tubulaire (11) est réalisée en acier inoxydable austénitique.

10. Récipient de cuisson (1) selon la revendication 9, **caractérisé en ce que** la partie de préhension tubulaire (11) présente une épaisseur inférieure à 3 millimètres, de préférence inférieure à 2 millimètres.

11. Récipient de cuisson (1) selon l'une quelconque des revendications 1 à 10, **caractérisé en ce que** la partie de préhension tubulaire (11) ne comporte qu'une ouverture traversante (20, 20a) entre la paroi d'extrémité (19, 19a) et l'orifice (14).

12. Récipient de cuisson (1) selon l'une quelconque des revendications 1 à 11, **caractérisé en ce qu'**il est une poêle, une casserole ou une sauteuse.

## Patentansprüche

1. Kochgefäß (1), das dazu bestimmt ist, auf eine Heizquelle gestellt zu werden, wobei das Kochgefäß (1) eine Seitenwand (4) und einen Griff (10) aufweist, der an der Seitenwand (4) durch Befestigungsorgane (15, 16) befestigt ist, wobei der Griff (10) einen röhrenförmigen Greifteil (11) aufweist, der sich radial zur Seitenwand (4) in einer Längsrichtung X erstreckt, wobei der rohrförmige Greifteil (11) ein Befestigungsende (12) und ein freies Ende (13), das mit einer Öffnung (14) versehen ist, aufweist, wobei das Befestigungsende (12) durch eine Endwand (19, 19a) verschlossen ist, die von der Seitenwand um mindestens 2 Millimeter beabstandet ist, um einen Kanal (7) zwischen der Seitenwand (4) und der Endwand (19, 19a) zu bilden und das Befestigungsende (12) eine geschlossene untere Wand (17) aufweist, **dadurch gekennzeichnet, dass** das Befestigungsende eine obere Wand (18) aufweist, die mit mindestens einer Durchgangsöffnung (20, 20a) versehen ist, die angrenzend an die Endwand (19, 19a) derart angeordnet ist, dass aufsteigende heiße Ströme, die sich während eines Kochvorgangs entlang der Seitenwand (4) fortbewegen, an der Stelle, an der der Griff (10) befestigt ist, einen Sog an der mindestens einen Öffnung (20, 20a) erzeugen, um einen Luftstrom aus der Öffnung (14) zum Inneren des rohrförmigen Greifteils (11) zu erzeugen und es dadurch zu kühlen.

2. Kochgefäß (1) nach Anspruch 1, **dadurch gekennzeichnet, dass** die Befestigungsorgane zwei seitliche Laschen (15, 16) aufweisen, die sich vertikal und entlang der Längsrichtung X zwischen dem Befestigungsende (12) und der Seitenwand (4) erstrecken.

3. Kochgefäß (1) nach einem der Ansprüche 1 bis 2, **dadurch gekennzeichnet, dass** sich die mindestens eine Durchgangsöffnung (20, 20a) in der Längsrichtung X über mindestens 5 Millimeter, vorzugsweise über mindestens 10 Millimeter, erstreckt.

4. Kochgefäß (1) nach einem der Ansprüche 1 bis 3, **dadurch gekennzeichnet, dass** die mindestens eine Durchgangsöffnung (20, 20a) eine Fläche von mehr als 100 mm2, vorzugsweise mehr als 200 mm², aufweist.

5. Kochgefäß (1) nach einem der Ansprüche 1 bis 4, **dadurch gekennzeichnet, dass** die Endwand (19, 19a) einen oberen Rand (25, 25a) aufweist, der die mindestens eine Durchgangsöffnung (20, 20a) teilweise begrenzt.

6. Kochgefäß nach Anspruch 5, **dadurch gekennzeichnet, dass** die mindestens eine Durchgangsöffnung (20) eine Trapezform aufweist, deren eine Basis durch den oberen Rand (25) gebildet wird, wobei der obere Rand (25) mindestens 10 Millimeter, vorzugsweise mindestens 20 Millimeter, von der Seitenwand beabstandet ist.

7. Kochgefäß (1) nach Anspruch 6, **dadurch gekennzeichnet, dass** die Trapezform zwei Seiten (21, 22) aufweist, die sich entlang der Längsrichtung X erstrecken, wobei der obere Rand (25) zusammen sowie jede Seite (21, 22) einen Abrissbereich für aufsteigende heiße Ströme bildet, die sich während eines Kochvorgangs entlang der Seitenwand (4) und um das Befestigungsende (12) des rohrförmigen Greifteils (11) fortbewegen, um einen Unterdruck über der Durchgangsöffnung (20) zu erzeugen.

8. Kochgefäß (1) nach Anspruch 5, **dadurch gekennzeichnet, dass** der obere Rand (25a) eine V-Form mit abgerundeter Spitze aufweist.

9. Kochgefäß (1) nach einem der Ansprüche 1 bis 8, **dadurch gekennzeichnet, dass** der rohrförmige Greifteil (11) aus austenitischem Edelstahl hergestellt ist.

10. Kochgefäß (1) nach Anspruch 9, **dadurch gekennzeichnet, dass** der rohrförmige Greifteil (11) eine Dicke von weniger als 3 Millimetern, vorzugsweise von weniger als 2 Millimetern, aufweist.

11. Kochgefäß (1) nach einem der Ansprüche 1 bis 10, **dadurch gekennzeichnet, dass** der rohrförmige Greifteil (11) nur eine Durchgangsöffnung (20, 20a) zwischen der Endwand (19, 19a) und der Öffnung (14) aufweist.

12. Kochgefäß (1) nach einem der Ansprüche 1 bis 11, **dadurch gekennzeichnet, dass** es eine Pfanne, ein Kochtopf oder eine Sauteuse ist.

## Claims

1. Cooking vessel (1) intended to be placed on a heating source, said cooking vessel (1) comprising a side wall (4) and a handle (10) fixed on said side wall (4) by fastening elements (15, 16), said handle (10) having a tubular gripping part (11) which extends radially to the side wall (4) in a longitudinal direction X, said tubular gripping part (11) having an attachment end (12) and a free end (13) provided with an orifice (14), the attachment end (12) being closed by an end wall (19, 19a) distant from the side wall by at least 2 millimetres in order to form a channel (7) between the side wall (4) and the end wall (19, 19a), and the attachment end (12) comprising a closed bottom wall (17), **characterised in that** the attachment end comprises an upper wall (18) provided with at least one through opening (20, 20a) arranged adjacent to the end wall (19, 19a) so that rising hot currents which during cooking travel along the side wall (4), in the place where the handle (10) is attached, create suction near the at least one opening (20, 20a) in order to generate an air flow from the orifice (14) to the inside of the tubular gripping part (11) and thereby cool it.

2. Cooking vessel (1) according to claim 1, **characterised in that** the fastening elements comprise two side tabs (15, 16) which extend vertically and along the longitudinal direction X, between the attachment end (12) and the side wall (4).

3. Cooking vessel (1) according to any one of claims 1 to 2, **characterised in that** the at least one through opening (20, 20a) extends in the longitudinal direction X over at least 5 millimetres, preferably over at least 10 millimetres.

4. Cooking vessel (1) according to any one of claims 1 to 3, **characterised in that** the at least one through opening (20, 20a) has a surface area greater than 100mm², preferably greater than 200m².

5. Cooking vessel (1) according to any one of claims 1 to 4, **characterised in that** the end wall (19, 19a) comprises an upper edge (25, 25a) which partially delimits the at least one through opening (20, 20a).

6. Cooking vessel according to claim 5, **characterised in that** the at least one through opening (20) has a trapezium shape, a base of which is formed by the upper edge (25), said upper edge (25) being distant from the side wall by at least 10 millimetres, preferably by at least 20 millimetres.

7. Cooking vessel (1) according to claim 6, **characterised in that** the trapezium shape comprises two sides (21, 22) which extend along the longitudinal direction X, the upper edge (25), as well as each side (21, 22) creating a zone for releasing rising hot currents which during cooking travel along the side wall (4) and around the attachment end (12) of the tubular gripping part (11) to generate a depression above the through opening (20).

8. Cooking vessel (1) according to claim 5, **characterised in that** the upper edge (25a) has a V-shape with a rounded tip.

9. Cooking vessel (1) according to any one of claims 1 to 8, **characterised in that** the tubular gripping part (11) is made of austenitic stainless steel.

10. Cooking vessel (1) according to claim 9, **characterised in that** the tubular gripping part (11) has a thickness less than 3 millimetres, preferably less than 2 millimetres.

11. Cooking vessel (1) according to any one of claims 1 to 10, **characterised in that** the tubular gripping part (11) only comprises one through opening (20, 20a) between the end wall (19, 19a) and the orifice (14).

12. Cooking vessel (1) according to any one of claims 1 to 11, **characterised in that** it is a pan, a saucepan or a frying pan.
